# EUROPEAN PATENT SPECIFICATION

(11) **EP 4 202 412 B1**
(45) Date of publication and mention of the grant of the patent: **18.06.2025**
(21) Application number: 20951316.7
(22) Date of filing: 24.08.2020
(51) Int. Cl.: G01N 21/31, G01N 21/74, G01J 3/42

(54) **ATOMIC ABSORPTION SPECTROPHOTOMETER AND CONTROL METHOD FOR ATOMIC ABSORPTION SPECTROPHOTOMETER**
ATOMABSORPTIONSSPEKTROPHOTOMETER UND STEUERVERFAHREN FÜR ATOMABSORPTIONSSPEKTROPHOTOMETER
SPECTROPHOTOMÈTRE À ABSORPTION ATOMIQUE ET PROCÉDÉ DE COMMANDE POUR SPECTROPHOTOMÈTRE À ABSORPTION ATOMIQUE

(43) Date of publication of application: 28.06.2023
(73) Proprietor: Shimadzu Corporation, Nakagyo-ku, Kyoto-shi, Kyoto 604-8511 (JP)
(72) Inventor: KOBAYASHI, Osuke, Kyoto-shi, Kyoto 604-8511 (JP); SEKIYA, Takumasa, Kyoto-shi, Kyoto 604-8511 (JP)
(74) Representative: Müller-Boré & Partner Patentanwälte PartG mbB
(86) International application number: PCT/JP2020/031749
(87) International publication number: WO 2022/044060

(56) References cited:
- CN-A- 111 366 783
- JP-A- 2006 047 011
- JP-A- 2020 101 523
- JP-A- H04 355 347
- "IEEE Guide for Application for Monitoring Equipment to Liquid-Immersed Transformers and Components", IEEE STANDARD, IEEE, PISCATAWAY, NJ, USA, 19 December 2012 (2012-12-19), pages 1 - 83, XP068045721, ISBN: 978-0-7381-8027-4

## Description

### TECHNICAL FIELD

The present disclosure relates to an atomic absorption spectrophotometer and a control method for an atomic absorption spectrophotometer.

### BACKGROUND ART

An atomic absorption spectrophotometer causes a light beam from a hollow cathode lamp for a measurement element to pass through an atomic vapor obtained by atomization of a sample, and then measures the concentration of an element to be measured which is included in the sample based on an absorbance indicating an amount of light absorbed by the atom to be measured. An atomic absorption spectrophotometer with a graphite furnace is widely used as one type of atomic absorption spectrophotometer. Advantageously, the atomic absorption spectrophotometer with a graphite furnace has a high rate of temperature rise for heating a sample and a high absolute sensitivity. The atomic absorption spectrophotometer has a graphite furnace serving as an atomizer that decomposes a compound, which is a sample, into free atomic vapor.

In this atomic absorption spectrophotometer, the sample is injected into a graphite tube used for the graphite furnace, and the graphite tube is electrically heated by the Joule heat of a current flowed through the graphite tube. In electrical heating of the graphite tube, a known alternate-current (AC) heating method flows an alternate current through the graphite tube using a transformer to heat the graphite tube (PTL 1). An atomic absorption spectrophotometer comprising a heating furnace with a power supply including a transformer, and a controller setting the temperature program of the furnace, is disclosed by PTL 2.

### CITATION LIST

### PATENT LITERATURE

PTL 1: Japanese Patent Laying-Open No. 2020-101523
PTL 2: Patent publication JPH04355347A

### SUMMARY OF INVENTION

### TECHNICAL PROBLEM

In the atomic absorption spectrophotometer adopting the AC heating method, an amount of a current flowed through the graphite tube fluctuates greatly during a single measurement. It is thus conceivable that the atomic absorption spectrophotometer may have a transformer that takes an amount of current maximized during a single measurement as a rated current. However, since a time for which a maximum amount of current flows is short during a single measurement, the atomic absorption spectrophotometer is overengineered, leading to higher manufacturing cost.

However, the atomic absorption spectrophotometer, which has a transformer with a rated current lower than that of a maximum amount of current, may fail to operate properly due to an increased amount of heat generated in the transformer. It is thus conceivable that in the atomic absorption spectrophotometer having a transformer with a rated current lower than the maximum amount of current, the transformer may be provided with a protection mechanism, such as an interruption circuit including a temperature fuse or a thermostat, or a temperature monitoring mechanism, such as a thermocouple or a thermistor. When the protection mechanism or the temperature monitoring mechanism of the transformer operates during a single measurement, however, the atomic absorption spectrophotometer may fail to obtain data during the measurement, resulting in inconvenience such as missing measurement data.

The present disclosure has been made to solve the above problem. An object of the present disclosure is to provide an atomic absorption spectrophotometer capable of stable measurement without causing inconvenience such as missing measurement data while reducing manufacturing cost, and also provide a control method for such an atomic absorption spectrophotometer.

### SOLUTION TO PROBLEM

An atomic absorption spectrophotometer of the present disclosure includes a furnace that heats a sample, a power supply that includes a transformer and supplies a current to the furnace, the transformer converting a voltage to be applied to the furnace, a measurement unit that measures an absorbance of the sample heated by the furnace, and a controller that controls the power supply and the measurement unit. The controller sets a temperature program of the furnace according to a sample to be measured, predicts, from information of the set temperature program, an attained temperature of the transformer during a continuous measurement, and prompts a user to change the temperature program when the predicted attained temperature reaches a prescribed temperature.

A control method for an atomic absorption spectrophotometer according to the present disclosure includes setting a temperature program of a furnace according to a sample to be measured, predicting, from information of the set temperature program, an attained temperature of a transformer during a continuous measurement, and prompting a user to change the temperature program when the predicted attained temperature reaches a prescribed temperature.

### ADVANTAGEOUS EFFECTS OF INVENTION

The atomic absorption spectrophotometer and the control method for an atomic absorption spectrophotometer described above enable stable measurement while reducing manufacturing cost so as not to cause inconvenience such as missing measurement data.

### BRIEF DESCRIPTION OF DRAWINGS

Fig. 1 is a schematic view showing a configuration of an atomic absorption spectrophotometer according to an embodiment.
Fig. 2 is a graph showing a temperature program and an absorbance of the atomic absorption spectrophotometer according to the embodiment.
Fig. 3 shows an example setting edit screen for setting a temperature program of the atomic absorption spectrophotometer according to the embodiment.
Fig. 4 is a graph showing the relationship between heating index and attained temperature.
Fig. 5 shows another example of the setting edit screen for setting the temperature program of the atomic absorption spectrophotometer according to the embodiment.
Fig. 6 shows an example in which a warning is displayed on the setting edit screen for setting the temperature program of the atomic absorption spectrophotometer according to the embodiment.
Fig. 7 is a flowchart showing a method of setting the temperature program of the atomic absorption spectrophotometer according to the embodiment.

### DESCRIPTION OF EMBODIMENTS

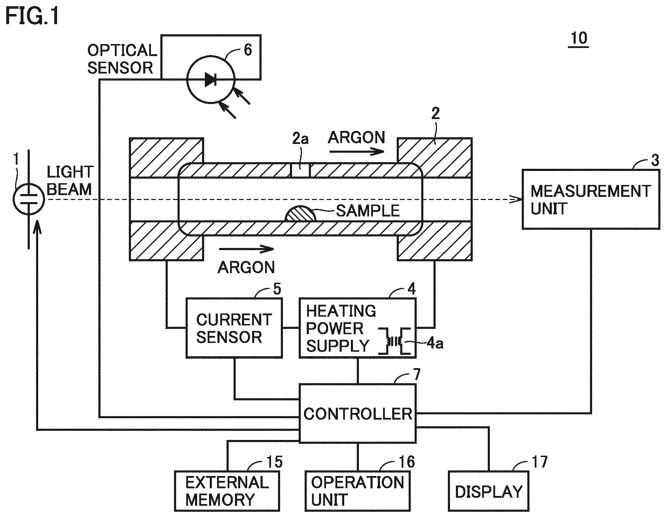

An embodiment of the present disclosure will now be described in detail with reference to the figures. Fig. 1 is a schematic view showing a configuration of an atomic absorption spectrophotometer according to the embodiment. An atomic absorption spectrophotometer 10 includes a light source 1 such as a hollow cathode lamp, a furnace 2 serving as an atomization unit, a measurement unit 3 including a spectroscope, a photomultiplier, and the like, a heating power supply 4 that supplies a current to furnace 2, a current sensor 5 that measures the current supplied to furnace 2, an optical sensor 6 that measures light from furnace 2, and a controller 7 that controls heating power supply 4, measurement unit 3, and the like.

Furnace 2, which is a graphite tube, for example, has a sample inlet 2a for charging a sample in the center of the graphite tube, heats the sample charged through sample inlet 2a, and atomizes the sample. Furnace 2 may be formed of a material other than the graphite tube. Heating power supply 4 that supplies a current to furnace 2 includes a transformer 4a, and converts a voltage of an AC power supply (not shown) via transformer 4a into a voltage to be applied to furnace 2. A gas such as argon gas, nitrogen gas, or compressed air is flowed from the opposite ends of the graphite tube and are discharged from the sample inlet to the outside, and also prevents acceleration of ashing and oxidation of the graphite tube. The temperature of furnace 2 is measured as an amount of light emitted from the graphite tube is detected by optical sensor 6.

Measurement unit 3 measures the absorbance of the sample heated by furnace 2, and thus, includes a spectroscope (not shown), a photomultiplier (not shown), and the like. The spectroscope is, for example, a Czerny-Turner spectroscope and has an entrance slit, a reflector, a diffraction grating, and an exit slit. The absorbance measured by the photomultiplier is amplified by an amplifier, converted into a digital signal by an A/D converter, and is then sent to controller 7.

Controller 7 includes an external memory 15, an operation unit 16 with a keyboard or the like, and a display 17 such as a liquid crystal display. Controller 7 also includes a CPU (Central Processing Unit) as the control center, a ROM (Read Only Memory) that stores a program and control data for the CPU to operate, a RAM (Random Access Memory) that functions as a work area for the CPU, a GPU (Graphics Processing Unit) that mainly performs image processing, an I/O interface for maintaining signal integrity with a peripheral device, and the like. The CPU or GPU can be configured as an FPGA (field-programmable gate array).

Controller 7 controls heating power supply 4 according to a temperature program, which will be described below, to heat the furnace, and causes measurement unit 3 to measure the absorbance of the sample. Specifically, light including a line spectrum emitted from light source 1 passes through the inside of the graphite tube of furnace 2 and is introduced into measurement unit 3. The introduced light is separated according to prescribed wavelengths in the spectroscope of measurement unit 3 and then reaches the photomultiplier. Though not shown in the figure, an appropriate light collection optical system is disposed between light source 1 and furnace 2 and between furnace 2 and measurement unit 3, so that a light beam is focused appropriately to be introduced into a subsequent stage.

In measurement of the sample, the sample is charged into the graphite tube from sample inlet 2a provided in the center of the graphite tube, and a large current is flowed from heating power supply 4 through the graphite tube, and the sample is heated to be atomized. Light passing through the inside of the graphite tube is absorbed strongly at a wavelength specific to an element included in the sample. Controller 7 calculates the ratio between the intensity of received light not subjected to such absorption and the intensity of received light subjected to such absorption, and determines the amount of the sample from the absorbance.

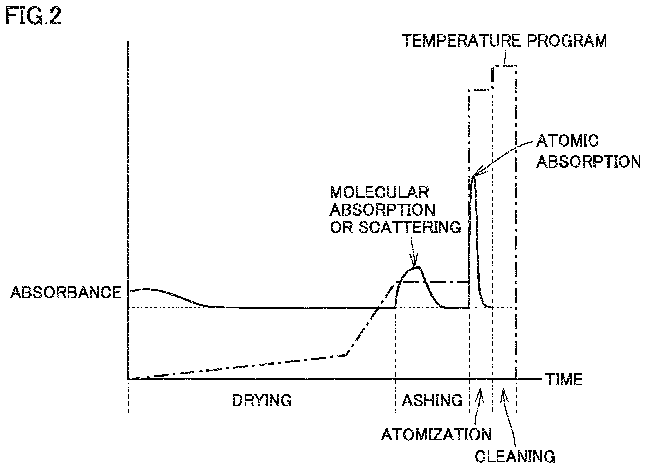

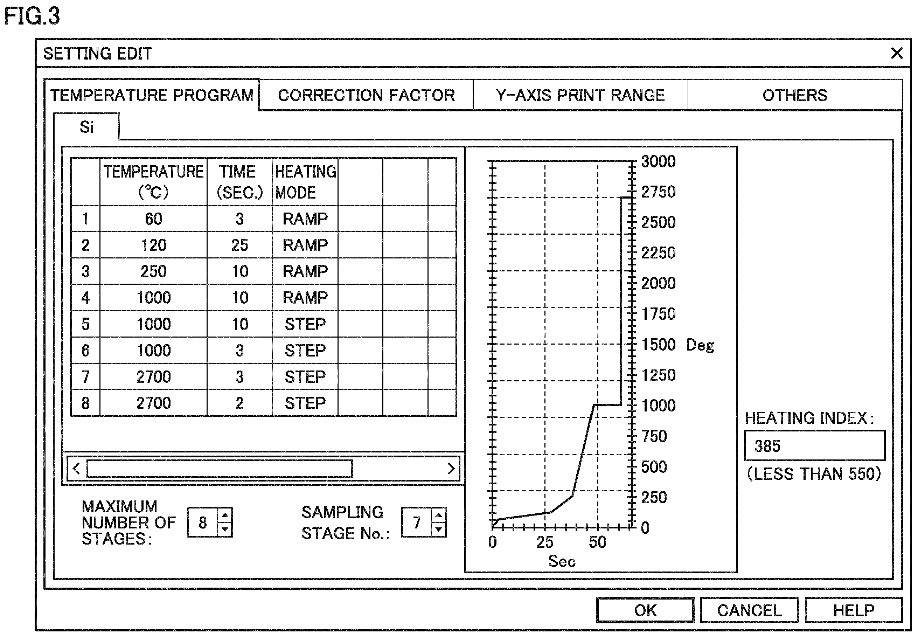

The temperature program and the absorbance of atomic absorption spectrophotometer 10 will be described in detail with reference to the figures. Fig. 2 is a graph showing the temperature program and the absorbance of the atomic absorption spectrophotometer according to the embodiment. As the user charges the sample into the graphite tube of furnace 2 and then presses the start switch of operation unit 16, controller 7 performs processing according to the set temperature program. Fig. 3 shows an example setting edit screen for setting the temperature program of the atomic absorption spectrophotometer according to the embodiment. Controller 7 displays the setting edit screen for setting the temperature program shown in Fig. 3 on display 17, according to the program prestored in the ROM, external memory 15, or the like.

The user sets a temperature, a time, and a heating mode so as to heat furnace 2 in the pattern of the temperature program which is indicated by the alternate long and short dash line of Fig. 2 by controlling heating power supply 4. Controller 7 controls heating power supply 4 in order of drying, ashing, atomization, and cleaning in synchronization with this temperature program. In drying and ashing, an inert gas (e.g., argon) is fed into the graphite tube to quickly discharge, to the outside, the water vapor during a drying period or the smoke during an ashing period which has been generated in the graphite tube. In the setting of the temperature program shown in Fig. 3, stages 1 to 4 are set as the drying period. The heating mode is set for heating to reach 60°C in 3 seconds (RAMP) at stage 1, and the heating mode is set for heating to reach 120°C in 25 seconds (RAMP) at stage 2. The heating mode is set for heating to reach 250°C in 10 seconds (RAMP) at stage 3, and the heating mode is set for heating to reach 1000°C in 10 seconds (RAMP) at stage 4.

In the setting of the temperature program shown in Fig. 3, stages 5 and 6 are set as the ashing period. The heating mode is set for heating to maintain 1000°C for 10 seconds (STEP) at stage 5, and the heating mode is set for heating to maintain 1000°C for 3 seconds (STEP) at stage 6.

After ashing, a stage 7 is set as the atomization period in the setting of the temperature program shown in Fig. 3. The heating mode is set for heating to maintain 2700°C for 3 seconds (STEP) at stage 7. Thus, the sample gas atomized in the graphite tube absorbs a light beam of light source 1, and the absorbance thereof is measured by measurement unit 3. During this atomization period, measurement unit 3 can measure the atomic absorption of the sample from the absorbance as shown in Fig. 2.

After atomization, a stage 8 is set as the cleaning period in the setting of the temperature program shown in Fig. 3. The heating mode is set for heating to maintain 2700°C for 2 seconds (STEP) at stage 8. After a cooling period of approximately 15 to 30 seconds, furnace 2 is heated based on the setting of the temperature program to measure a subsequent sample.

Controller 7 causes optical sensor 6 to measure a temperature of furnace 2 and current sensor 5 to measure a current supplied from heating power supply 4 to furnace 2, thereby performing temperature control such that the temperature of furnace 2 attains to the temperature set in the temperature program.

As described above, in heating by flowing a current through the graphite tube, an alternate current is flowed through the graphite tube using transformer 4a of heating power supply 4, thereby heating the graphite tube. As can be seen from the temperature program shown in Fig. 3, the amount of the current flowed through the graphite tube fluctuates greatly during a single measurement. Thus, the atomic absorption spectrophotometer, which has a transformer that takes a maximum amount of a current during a single measurement as a rated current, is overengineered because a time for which the maximum amount of current flows is short during a single measurement, leading to higher manufacturing cost.

The atomic absorption spectrophotometer, which has a transformer with a rated current lower than that of the maximum amount of current, however, may fail to operate properly due to an increased amount of heat generated in the transformer. For this reason, the atomic absorption spectrophotometer, which has a transformer with a rated current lower than the maximum amount of current, needs to be provided with a protection mechanism, such as an isolation circuit including a temperature fuse or a thermostat, or a temperature monitoring mechanism, such as a thermocouple or a thermistor.

Thus, atomic absorption spectrophotometer 10 according to the present embodiment, while having a transformer with a rated current lower than the maximum amount of current, can control the transformer to operate properly by predicting an attained temperature of a transformer using the set temperature program without any protection mechanism such as an interruption circuit or any temperature monitoring mechanism such as a thermocouple or a thermistor. In other words, atomic absorption spectrophotometer 10 controls the transformer to operate properly by software without any additional hardware mechanism.

In particular, when the atomic absorption spectrophotometer is provided with the protection mechanism such as an interruption circuit, or the temperature monitoring mechanism such as a thermocouple or a thermistor, if the protection mechanism or the temperature monitoring mechanism of the transformer operates during a single measurement, the atomic absorption spectrophotometer may fail to obtain data during the measurement, resulting in inconvenience such as missing measurement data. Atomic absorption spectrophotometer 10, however, controls the transformer to operate properly by software, and accordingly, does not experience inconvenience such as missing measurement data caused by a failure to obtain data during the measurement.

Specifically, controller 7 predicts an attained temperature of transformer 4a in a continuous measurement (operation) from the information of the temperature program of furnace 2 which is set before starting, and prompts the user to change the temperature program when the predicted attained temperature of transformer 4a is equal to or higher than a temperature limit.

Controller 7 predicts the attained temperature of transformer 4a based on a heating index. Herein, the heating index is a value obtained by dividing the integral value of a function of the heating temperature and the heating time of furnace 2 by the sum of the heating time and the cooling time. In other words, the heating index is a value obtained by dividing the area shown in Fig. 3, indicated by the heating temperature and the time of the temperature program, by (heating time + cooling time). In the temperature program shown in Fig. 3, the heating index is calculated to be approximately 385 with a cooling time of 30 seconds.

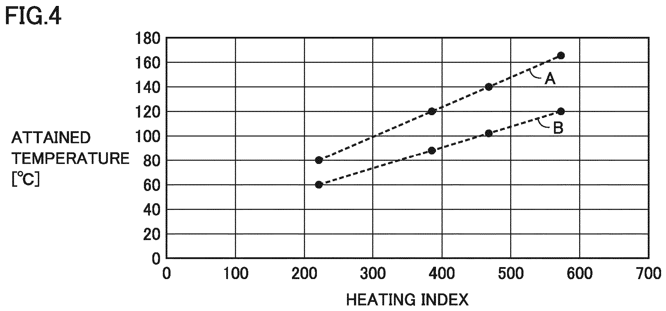

It has been experimentally found that this heating index and the attained temperature of transformer 4a during a continuous measurement have a strong correlation, and from this relationship, the attained temperature of transformer 4a during a continuous measurement can be predicted uniquely. Fig. 4 is a graph showing the relationship between heating index and attained temperature. The vertical axis and the horizontal axis of Fig. 4 represent the attained temperature and the heating index of transformer 4a, respectively. Fig. 4 is a graph showing the relationship between the heating index and the attained temperature of two transformers having different specifications. In other words, the graph showing the relationship between heating index and attained temperature depends on the specifications of the transformer used for heating power supply 4. The graph showing the relationship between the heating index and the attained temperature of transformer 4a is a graph A, which can be expressed as a linear function of y (attained temperature) = 0.2437x (heating index) + 25.701. This function has a contributing ratio (R²) as high as 0.9997.

Although it has been described that a graph B is a graph showing the relationship between the heating index and the attained temperature of the transformer having different specifications from those of transformer 4a, the present disclosure is not limited thereto. Even for transformer 4a having the same specifications, the graph showing the relationship between heating index and attained temperature changes according to any other condition (prescribed condition), such as the measurement mode or the drive time of transformer 4a. For example, when the measurement mode is changed to another measurement mode with a different cooling time, the graph showing the relationship between the heating index and the attained temperature of the transformer is changed. When the drive time of transformer 4a exceeds a prescribed time, for example, the graph showing the relationship between the heating index and the attained temperature of the transformer is changed in consideration of the deterioration of transformer 4a.

The graph showing the relationship between the heating index and the attained temperature of the transformer shown in Fig. 4 is a profile showing the relationship between the heating index and the attained temperature of the transformer. This profile is prestored in external memory 15. This profile may be stored as the function of y (attained temperature) and x (heating index) or stored as a table summarizing the numerical values of y (attained temperature) and x (heating index). Controller 7 changes the profile (graph) showing the relationship between the heating index and the attained temperature of the transformer according to the prescribed condition.

In the temperature program shown in Fig. 3, the attained temperature of transformer 4a is set to be lower than 160°C (prescribed temperature), with the use of graph A shown in Fig. 4. In other words, in graph A shown in Fig. 4, the heating index is 550 when the attained temperature of transformer 4a is 160°C (prescribed temperature), and accordingly, the heating index of the temperature program shown in Fig. 3, which is approximately 385, has not reached 550 that is the heating index of the prescribed temperature. Thus, controller 7 can use the heating index of the temperature program to predict the attained temperature of transformer 4a during a continuous measurement and determine whether the attained temperature predicted indirectly has reached the prescribed temperature, thereby achieving an overheat protection function of the transformer by software. The heating index may be normalized with 550, which is the heating index of the prescribed temperature, as 100.

When the heating index of the temperature program shown in Fig. 3 is approximately 385, the attained temperature of transformer 4a can be predicted to be approximately 120°C from graph A shown in Fig. 4. Calculation of the heating index is not necessary as long as the attained temperature of transformer 4a can be predicted from the information of the temperature program.

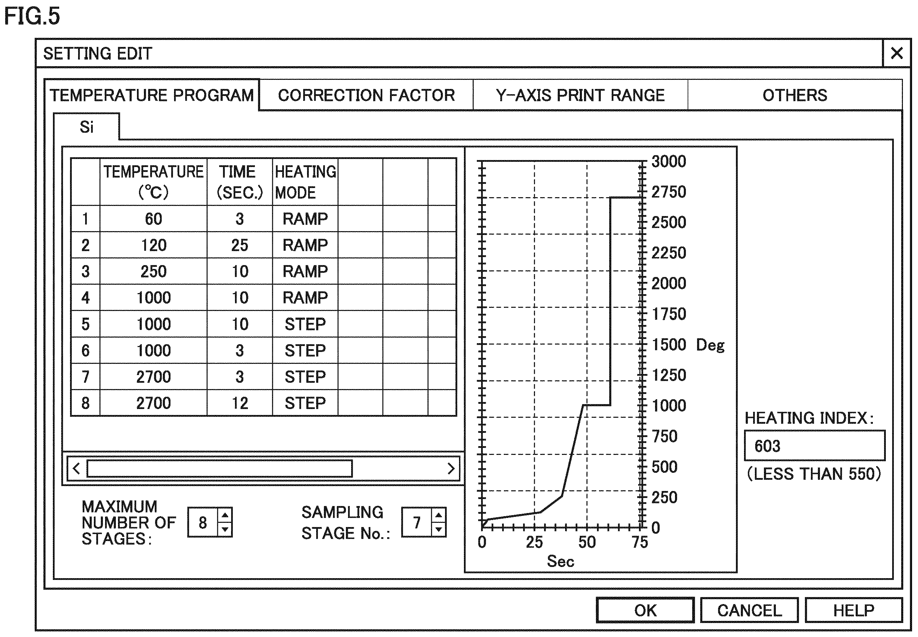

Fig. 5 shows another example of the setting edit screen for setting the temperature program of atomic absorption spectrophotometer 10 according to the embodiment. Also in the setting of the temperature program shown in Fig. 5, stages 1 to 4 are set as the drying period as in the temperature program shown in Fig. 3. The heating mode is set for heating to reach 60°C in 3 seconds (RAMP) at stage 1, and the heating mode is set for heating to reach 120°C in 25 seconds (RAMP) at stage 2. The heating mode is set for heating to reach 250°C in 10 seconds (RAMP) at stage 3, and the heating mode is set for heating to reach 1000°C in 10 seconds (RAMP) at stage 4.

Also in the setting of the temperature program shown in Fig. 5, stages 5 and 6 are set as the ashing period as in the temperature program shown in Fig. 3. The heating mode is set for heating to maintain 1000°C for 10 seconds (STEP) at stage 5, and the heating mode is set for heating to maintain 1000°C for 3 seconds (STEP) at stage 6.

After ashing, stage 7 is set as the atomization period also in the setting of the temperature program shown in Fig. 5 as in the temperature program shown in Fig. 3. The heating mode is set for heating to maintain 2700°C for 3 seconds (STEP) at stage 7.

After atomization, stage 8 is set as the cleaning period also in the setting of the temperature program shown in Fig. 5 as in the temperature program shown in Fig. 3. However, the heating mode is set for heating to maintain 2700°C for 12 seconds (STEP) at stage 8 shown in Fig. 5, unlike at stage 8 shown in Fig. 3. In the temperature program shown in Fig. 5, thus, the heating index is calculated to be approximately 603 with a cooling period of 30 seconds.

Since the heating index of the temperature program shown in Fig. 5 is approximately 603 and exceeds 550, which is the heating index of the prescribed temperature, controller 7 can predict the attained temperature of transformer 4a during a continuous measurement, and accordingly, determine that the attained temperature predicted indirectly has reached the prescribed temperature. Controller 7 thus prompts the user to change the temperature program.

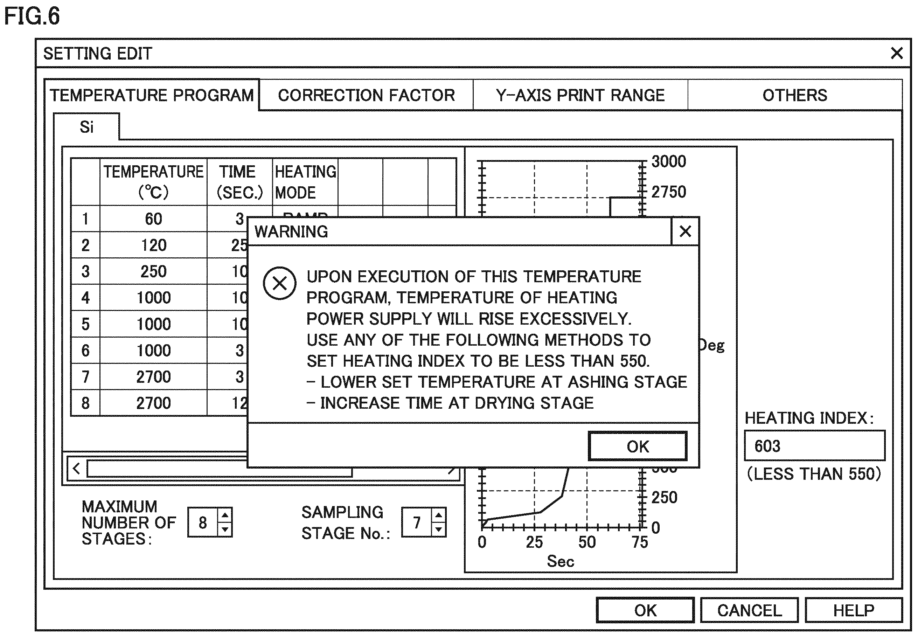

It is conceivable, as an example of prompting the user to change the temperature program, that a warning window may be displayed to be superimposed on the setting edit screen of the temperature program. Fig. 6 shows an example in which a warning is displayed on the setting edit screen for setting the temperature program of atomic absorption spectrophotometer 10 according to the embodiment. Fig. 6 displays, on the warning display, information indicating that temperature will rise excessively and information that prompts the user to change the temperature program in order to avoid such a situation. The information that prompts the user to change the temperature program also displays the information that advises a set value to be changed. The method of prompting the user to change the temperature program by controller 7 is not limited to the method using the warning window shown in Fig. 6, and it may be, for example, a method of emitting a warning sound or displaying a set value to be changed in red.

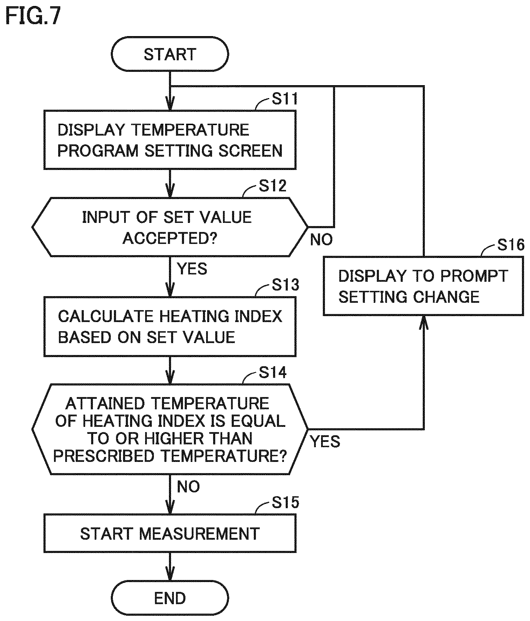

Next, the method of setting the temperature program of atomic absorption spectrophotometer 10 will be described in detail with reference to the flowchart. Fig. 7 is a flowchart showing the method of setting the temperature program of atomic absorption spectrophotometer 10 according to the embodiment. First, controller 7 displays, on display 17, a setting edit screen for setting the temperature program shown in Fig. 3 (step S11). Controller 7 determines whether it has accepted input of a set value for setting the temperature program (step S12). Specifically, controller 7 accepts input of all the set values (e.g., maximum number of stages, temperature, time, heating mode, etc.) necessary for the user to set the temperature program using operation unit 16, and when accepting input of all the set values, determines that it has accepted input of the set value. Thus, when determining that it has not accepted input for all the set values (NO at step S12), controller 7 returns the process to step S11.

When determining that it has accepted input of all the set values (YES at step S12), controller 7 calculates a heating index based on the set value of the temperature program (step S13). Based on the set value set in the temperature program shown in Fig. 3, controller 7 calculates a heating index to be approximately 385 with a cooling time of 30 seconds.

Controller 7 determines whether the attained temperature of transformer 4a (the attained temperature of the heating index) predicted from the calculated heating index is equal to or higher than the prescribed temperature (step S14). Specifically, controller 7 uses the calculated heating index and the graph shown in Fig. 4 to predict the attained temperature of transformer 4a during a continuous measurement, thereby determining whether the attained temperature predicted indirectly has reached the prescribed temperature. When determining that the attained temperature of the calculated heating index is not equal to or higher than the prescribed temperature (NO at step S14), controller 7 heats furnace 2 based on the set temperature program to start a measurement (step S15). The heating index of the temperature program shown in Fig. 3 is approximately 385 and has not reached 550, which is the heating index of the prescribed temperature, controller 7 determines that the attained temperature of the calculated heating index is not equal to or higher than the prescribed temperature, and starts a measurement.

In contrast, when determining that the attained temperature of the calculated heating index is equal to or higher than the prescribed temperature (YES at step S14), controller 7 provides display for prompting a setting change on display 17. Specifically, controller 7 displays the warning window shown in Fig. 6 to be superimposed on the setting edit screen.

As described above, atomic absorption spectrophotometer 10 can achieve the overheat protection function of the transformer by software without any special hardware. Atomic absorption spectrophotometer 10 can thus achieve safety as well as cost effectiveness while being equipped with a reasonable transformer 4a. For the temperature program in which transformer 4a is overheated due to a continuous measurement, atomic absorption spectrophotometer 10 can also prompt the user to change the temperature program before starting a measurement, thus preventing a situation in which transformer 4a is overheated due to the temperature program after start of a measurement, which results in interruption of the measurement. It is needless to say that atomic absorption spectrophotometer 10 may be provided with the protective mechanism or the temperature monitoring mechanism of the transformer, which is hardware, to thereby ensure double safety. With reference to the flowchart shown in Fig. 7, the temperature program needs to be continuously changed until the attained temperature of the calculated heating index is determined to be not equal to or higher than the prescribed temperature. Alternatively, atomic absorption spectrophotometer 10 may start a measurement according to user's judgment even when the attained temperature of the calculated heating index is equal to or higher than the prescribed temperature.

It is to be understood that the embodiment disclosed herein is presented for the purpose of illustration and non-restrictive in every respect. It is therefore intended that the scope of the present invention is defined by claims, not only by the embodiment described above.

### REFERENCE SIGNS LIST

1 light source; 2 furnace; 2a sample inlet, 3 measurement unit; 4 heating power supply; 4a transformer; 5 current sensor; 6 optical sensor; 7 controller; 8 stage; 10 atomic absorption spectrophotometer; 15 external memory; 16 operation unit; 17 display.

## Claims

1. An atomic absorption spectrophotometer (10) comprising:
a furnace (2) that heats a sample;
a power supply (4) that includes a transformer (4a) and supplies a current to the furnace (2), the transformer (4a) converting a voltage to be applied to the furnace (2);
a measurement unit (3) that measures an absorbance of the sample heated by the furnace (2); and
a controller (7) that controls the power supply and the measurement unit,
wherein the controller (7) sets a temperature program of the furnace (2) according to a sample to be measured, **characterized in that**:
the controller (7) predicts, from information of the set temperature program, an attained temperature of the transformer (4a) during a continuous measurement, and
prompts a user to change the temperature program when the predicted attained temperature reaches a prescribed temperature.

2. The atomic absorption spectrophotometer according to claim 1, wherein the controller
determines, from the information of the temperature program, a value of a heating index obtained by dividing an integral value of a function of a heating temperature and a heating time of the furnace by a sum of the heating time and a cooling time, and
predicts the attained temperature of the transformer based on the heating index.

3. The atomic absorption spectrophotometer according to claim 2, wherein the controller
presets a profile showing a relationship between the heating index and the attained temperature of the transformer, and
predicts the attained temperature of the transformer based on the heating index determined from the information of the temperature program and the preset profile.

4. The atomic absorption spectrophotometer according to claim 3, wherein the controller changes the profile according to a prescribed condition.

5. The atomic absorption spectrophotometer according to claim 4, wherein the prescribed condition includes at least one condition of a measurement mode, specifications of the transformer, and a drive time of the transformer.

6. The atomic absorption spectrophotometer according to any one of claims 3 to 5, wherein the profile is stored as a function of the heating index and the attained temperature of the transformer.

7. The atomic absorption spectrophotometer according to claim 2, wherein the controller prompts the user to change the cooling time after heating according to the temperature program when the predicted attained temperature reaches the prescribed temperature.

8. The atomic absorption spectrophotometer according to any one of claims 1 to 5, wherein the temperature program includes information on a temperature and a time during each of a drying period, an ashing period, an atomization period, and a cleaning period.

9. The atomic absorption spectrophotometer according to claim 8, wherein the controller prompts the user to change the temperature or the time during the drying period of the temperature program when the predicted attained temperature reaches the prescribed temperature.

10. The atomic absorption spectrophotometer according to any one of claims 1 to 5, wherein the furnace is a graphite tube.

11. A control method for an atomic absorption spectrophotometer (10) including a furnace (2) that heats a sample, a power supply (4) that includes a transformer (4a) and supplies a current to the furnace (2), the transformer (4a) converting a voltage to be applied to the furnace (2), a measurement unit (3) that measures an absorbance of the sample heated by the furnace (2), and a controller (7) that controls the power supply (4) and the measurement unit (3), the control method comprising:
setting a temperature program of the furnace (2) according to a sample to be measured; and **characterized by**:
predicting, from information of the set temperature program, an attained temperature of the transformer (4a) during a continuous measurement; and
prompting a user to change the temperature program when the predicted attained temperature reaches a prescribed temperature.

## Patentansprüche

1. Atomabsorptionsspektrofotometer (10), umfassend:
einen Ofen (2), der eine Probe erhitzt;
eine Stromversorgung (4), die einen Transformator (4a) aufweist und dem Ofen (2) einen Strom zuführt, wobei der Transformator (4a) eine an dem Ofen (2) anzulegende Spannung umwandelt;
eine Messeinheit (3), die eine Absorption der durch den Ofen (2) erhitzten Probe misst; und
eine Steuerung (7), die die Stromversorgung und die Messeinheit steuert, wobei die Steuerung (7) ein Temperaturprogramm des Ofens (2) gemäß einer zu messenden Probe einstellt,
**dadurch gekennzeichnet, dass**:
die Steuerung (7) anhand von Informationen des eingestellten Temperaturprogramms eine erzielte Temperatur des Transformators (4a) vorhersagt, und einen Benutzer auffordert, das Temperaturprogramm zu wechseln, wenn die vorhergesagte erzielte Temperatur eine vorgeschriebene Temperatur erreicht.

2. Atomabsorptionsspektrofotometer nach Anspruch 1, wobei die Steuerung
anhand der Informationen des Temperaturprogramms einen Wert eines Erhitzungsindexes bestimmt, der durch Teilen eines Integralwerts einer Funktion einer Erhitzungstemperatur und einer Erhitzungszeit des Ofens durch eine Summe der Erhitzungszeit und einer Abkühlungszeit erhalten wird, und
die erzielte Temperatur des Transformators basierend auf dem Erhitzungsindex vorhersagt.

3. Atomabsorptionsspektrofotometer nach Anspruch 2, wobei die Steuerung
vorab ein Profil einstellt, das ein Verhältnis zwischen dem Erhitzungsindex und der erzielten Temperatur des Transformators zeigt, und
die erzielte Temperatur des Transformators basierend auf dem Erhitzungsindex, der anhand der Informationen des Temperaturprogramms und dem vorab eingestellten Profil bestimmt wird, vorhersagt.

4. Atomabsorptionsspektrofotometer nach Anspruch 3, wobei die Steuerung das Profil gemäß einer vorgeschriebenen Bedingung ändert.

5. Atomabsorptionsspektrofotometer nach Anspruch 4, wobei die vorgeschriebene Bedingung zumindest eine Bedingung eines Messmodus, Spezifikationen des Transformators und eine Ansteuerungszeit des Transformators umfasst.

6. Atomabsorptionsspektrofotometer nach einem der Ansprüche 3 bis 5, wobei das Profil als eine Funktion des Erhitzungsindexes und der erzielten Temperatur des Transformators gespeichert wird.

7. Atomabsorptionsspektrofotometer nach Anspruch 2, wobei die Steuerung den Benutzer auffordert, die Abkühlungszeit nach dem Erhitzen gemäß dem Temperaturprogramm zu ändern, wenn die vorhergesagte erzielte Temperatur die vorgeschriebene Temperatur erreicht.

8. Atomabsorptionsspektrofotometer nach einem der Ansprüche 1 bis 5, wobei das Temperaturprogramm Informationen bezüglich einer Temperatur und einer Zeit während jedem eines Trocknungszeitraums, eines Veraschungszeitraums, eines Atomisierungszeitraums und eines Reinigungszeitraums umfasst.

9. Atomabsorptionsspektrofotometer nach Anspruch 8, wobei die Steuerung den Benutzer auffordert, die Temperatur oder die Zeit während dem Trocknungszeitraum des Temperaturprogramms zu ändern, wenn die vorhergesagte erzielte Temperatur die vorgeschriebene Temperatur erreicht.

10. Atomabsorptionsspektrofotometer nach einem der Ansprüche 1 bis 5, wobei der Ofen eine Grafitröhre ist.

11. Steuerverfahren für ein Atomabsorptionsspektrofotometer (10), umfassend:
einen Ofen (2), der eine Probe erhitzt,
eine Stromversorgung (4), die einen Transformator (4a) aufweist und dem Ofen (2) einen Strom zuführt, wobei der Transformator (4a) eine an dem Ofen (2) anzulegende Spannung umwandelt,
eine Messeinheit (3), die eine Absorption der durch den Ofen (2) erhitzten Probe misst, und
eine Steuerung (7), die die Stromversorgung (4) und die Messeinheit (3) steuert, wobei das Verfahren Folgendes umfasst:
Einstellen eines Temperaturprogramms des Ofens (2) gemäß einer zu messenden Probe; und **gekennzeichnet durch**:
Vorhersagen, anhand von Informationen des eingestellten Temperaturprogramms, einer erzielten Temperatur des Transformators (4a) während einer kontinuierlichen Messung; und
Auffordern eines Benutzers, das Temperaturprogramm zu wechseln, wenn die vorhergesagte erzielte Temperatur eine vorgeschriebene Temperatur erreicht.

## Revendications

1. Spectrophotomètre à absorption atomique (10) comprenant :
un four (2) qui chauffe un échantillon ;
une alimentation électrique (4) qui comporte un transformateur (4a) et qui fournit un courant au four (2), le transformateur (4a) convertissant une tension à appliquer au four (2) ;
une unité de mesure (3) qui mesure une absorbance de l'échantillon chauffé par le four (2) ; et
un dispositif de commande (7) qui commande l'alimentation et l'unité de mesure,
dans lequel le dispositif de commande (7) définit un programme de température du four (2) en fonction d'un échantillon à mesurer,
**caractérisé en ce que** :
le dispositif de commande (7) prédit, à partir des informations du programme de température défini, une température atteinte du transformateur (4a) pendant une mesure continue, et invite un utilisateur à modifier le programme de température lorsque la température atteinte prédite atteint une température prescrite.

2. Spectrophotomètre à absorption atomique selon la revendication 1, dans lequel le dispositif de commande
détermine, à partir des informations du programme de température, une valeur d'un indice de chauffage obtenu en divisant une valeur intégrale d'une fonction d'une température de chauffage et d'un temps de chauffage du four par une somme du temps de chauffage et d'un temps de refroidissement, et
prédit la température atteinte du transformateur sur la base de l'indice de chauffage.

3. Spectrophotomètre à absorption atomique selon la revendication 2, dans lequel le dispositif de commande
prérègle un profil représentant une relation entre l'indice de chauffage et la température atteinte du transformateur, et
prédit la température atteinte du transformateur sur la base de l'indice de chauffage déterminé à partir des informations du programme de température et du profil prédéfini.

4. Spectrophotomètre à absorption atomique selon la revendication 3, dans lequel le dispositif de commande modifie le profil selon une condition prescrite.

5. Spectrophotomètre à absorption atomique selon la revendication 4, dans lequel la condition prescrite comporte au moins une condition parmi un mode de mesure, des spécifications du transformateur et un temps d'entraînement du transformateur.

6. Spectrophotomètre à absorption atomique selon l'une quelconque des revendications 3 à 5, dans lequel le profil est stocké en fonction de l'indice de chauffage et de la température atteinte du transformateur.

7. Spectrophotomètre à absorption atomique selon la revendication 2, dans lequel le dispositif de commande invite l'utilisateur à modifier le temps de refroidissement après chauffage selon le programme de température lorsque la température atteinte prédite atteint la température prescrite.

8. Spectrophotomètre à absorption atomique selon l'une quelconque des revendications 1 à 5, dans lequel le programme de température comporte des informations sur une température et un temps pendant chacune d'une période de séchage, d'une période de calcination, d'une période d'atomisation et d'une période de nettoyage.

9. Spectrophotomètre à absorption atomique selon la revendication 8, dans lequel le dispositif de commande invite l'utilisateur à modifier la température ou le temps pendant la période de séchage du programme de température lorsque la température atteinte prédite atteint la température prescrite.

10. Spectrophotomètre à absorption atomique selon l'une quelconque des revendications 1 à 5, dans lequel le four est un tube en graphite.

11. Procédé de commande pour un spectrophotomètre à absorption atomique (10) comportant :
un four (2) qui chauffe un échantillon,
une alimentation électrique (4) qui comporte un transformateur (4a) et fournit un courant au four (2), le transformateur (4a) convertissant une tension à appliquer au four (2),
une unité de mesure (3) qui mesure une absorbance de l'échantillon chauffé par le four (2), et
un dispositif de commande (7) qui commande l'alimentation électrique (4) et l'unité de mesure (3), le procédé de commande comprenant :
le réglage d'un programme de température du four (2) en fonction d'un échantillon à mesurer ; **caractérisé par** :
la prédiction, à partir d'informations du programme de température réglé, d'une température atteinte du transformateur (4a) pendant une mesure continue ; et
l'invitation d'un utilisateur à modifier le programme de température lorsque la température atteinte prédite atteint une température prescrite.
